# EUROPÄISCHE PATENTSCHRIFT

(11) **EP 1 995 108 B1**
(45) Veröffentlichungstag und Bekanntmachung des Hinweises auf die Patenterteilung: **30.05.2018**
(21) Anmeldenummer: 08156508.7
(22) Anmeldetag: 20.05.2008
(51) Int. Cl.: B60L 1/00

(54) **Vorrichtung zur elektrischen Versorgung eines an ein Arbeitsfahrzeug ankoppelbaren Anbaugeräts**
Device for supplying with electricity an implement which can be coupled to a work vehicle
Dispositif d'alimentation électrique d'un élément auxiliaire pouvant être couplé á un véhicule de travail

(30) Priorität: 24.05.2007 DE 102007024645
(43) Veröffentlichungstag der Anmeldung: 26.11.2008
(73) Patentinhaber: Deere & Company, Moline, IL 61265 (US)
(72) Erfinder: Tarasinski Dr., Nicolai, 67227, Frankenthal (DE); Hahn, Klaus, 68199, Mannheim (DE)
(74) Vertreter: John Deere GmbH & Co. KG

(56) Entgegenhaltungen:
- AU-B2- 633 679
- US-A- 4 196 785
- US-A1- 2003 150 156
- US-B1- 6 237 278

## Beschreibung

Die Erfindung betrifft eine Vorrichtung zur elektrischen Versorgung eines an ein Arbeitsfahrzeug ankoppelbaren Anbaugeräts. Das Arbeitsfahrzeug umfasst einen Generator und eine Anbauschnittstelle. Mit dem Generator ist elektrische Energie erzeugbar. An der Anbauschnittstelle ist ein Anbaugerät an das Arbeitsfahrzeug reversibel ankoppelbar. Das Anbaugerät weist mindestens eine elektrische Last auf, mit welcher eine landwirtschaftliche Arbeitsfunktion ausführbar ist. Eine Vorrichtung mit den Merkmalen des Oberbegriffs des Anspruchs 1 ist aus der US 2003/0150156 bekannt. Landwirtschaftliche Arbeitsfahrzeuge wie z.B. Feldhäcksler, selbstfahrende Spritzen und Traktoren sind aus dem Stand der Technik bekannt. Ein Traktor ist ein vielseitiges Arbeitsfahrzeug, da an einen Traktor unterschiedliche Anbaugeräte angekoppelt werden können. Regelmäßig werden an einen Traktor Pflüge, Eggen, Grubber, Sämaschinen, Spritzen, Mähwerke und Rundballenpressen angekoppelt. Dementsprechend führt ein Traktor mit einem jeweils angekoppelten Anbaugerät unterschiedlichste landwirtschaftliche Arbeitsfunktionen aus. Dies macht es auch erforderlich, dass der Traktor das jeweilige Anbaugerät entsprechend ansteuert, falls die landwirtschaftliche Arbeitsfunktion, welche mit dem Anbaugerät realisiert wird, mit einem Aktuator, einem Werkzeug oder mit einem Motor realisiert wird.
Es sind Anbaugeräte bekannt, deren Aktuatoren bzw. Werkzeuge mechanisch angetrieben werden, wobei mechanische Antriebsleistung von einer am Traktor vorgesehenen Zapfwelle auf das Anbaugerät übertragen wird. Ein Beispiel für ein solches Anbaugerät ist eine Rundballenpresse. Weiterhin sind Anbaugeräte bekannt, welche hydraulisch angetrieben werden. Hierzu sind am Traktor Hydraulikschnellkupplungen vorgesehen, welche mit Schläuchen des Anbaugeräts verbunden werden. Ein solches Anbaugerät ist beispielsweise ein Frontlader oder eine gezogene Spritze. Beim Frontlader erfolgt die Steuerung bzw. Betätigung des Auslegers hydraulisch. Bei der gezogenen Spritze wird das Gestänge hydraulisch verstellt.

Sowohl die mechanische als auch die hydraulische Übertragung von Leistung zwischen dem Arbeitsfahrzeug und dem Anbaugerät bringt Probleme bei der Ansteuerung mit sich. So ist es unter anderem erforderlich, dass der Verbrennungsmotor des Arbeitsfahrzeugs bei einer bestimmten Drehzahl betrieben wird und/oder dass das Getriebe ein bestimmtes, vorgegebenes Übersetzungsverhältnis aufweist, damit das über die Zapfwelle angesteuerte Anbaugerät bestimmungsgemäß betrieben werden kann. Hierdurch kann sich ein schlechter Wirkungsgrad des Gespanns, bestehend aus Arbeitsfahrzeug und Anbaugerät, ergeben.

Es sind Anbaugeräte bekannt, welche elektrische Verbraucher aufweisen. Dies sind Elektromotoren und/oder Lüfter einer relativ geringen Leistungsklasse. Weiterhin können Beleuchtungseinrichtungen und/oder Elektromagnete als Stellantriebe elektrisch betrieben werden. Diese werden bislang vom Bordnetz des Arbeitsfahrzeugs versorgt. Hierfür erforderliche elektrische Energie wird von der herkömmlichen Lichtmaschine des Arbeitsfahrzeugs erzeugt. Es werden bislang keine Anbaugeräte mit elektrischen Lasten bzw. elektrischen Verbrauchern eingesetzt, welche eine größere Leistungsaufnahme zum Ausführen einer landwirtschaftlichen Arbeitsfunktion aufweisen.

Der vorliegenden Erfindung liegt daher die Aufgabe zugrunde, eine Vorrichtung der eingangs genannten Art anzugeben und weiterzubilden, durch welche die vorgenannten Probleme überwunden werden. Insbesondere soll mit der Vorrichtung eine elektrische Versorgung eines an das Arbeitsfahrzeug ankoppelbaren Anbaugeräts möglich sein, wobei die Regelbarkeit beim Betrieb des Anbaugeräts flexibler gestaltet oder verbessert und der Wirkungsgrad erhöht werden soll.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Vorrichtung der eingangs genannten Art gekennzeichnet durch eine Übertragungseinrichtung und mindestens einen Transformator. Mit der Übertragungseinrichtung ist die vom Generator des Arbeitsfahrzeugs erzeugte elektrische Energie in Form von Wechselspannung auf das Anbaugerät übertragbar. Der Transformator ist am Anbaugerät vorgesehen. Mit dem Transformator ist die übertragene Wechselspannung wandelbar, um der elektrischen Last zur Verfügung gestellt zu werden.

Erfindungsgemäß wird ein Konzept zur elektrischen Versorgung des landwirtschaftlichen Arbeitsfahrzeugs und/oder des Anbaugeräts vorgeschlagen. Hierbei weist das Anbaugerät eine elektrische Last bzw. einen elektrischen Verbraucher auf, mit welcher bzw. mit welchem eine landwirtschaftliche Arbeitsfunktion ausgeführt werden kann. Da die elektrische Energie zwischen dem Arbeitsgerät und dem Anbaugerät in Form von Wechselspannung übertragen wird, kann mit dem vorgeschlagenen Konzept eine hohe Leistungsdichte bei der Übertragung der elektrischen Energie erzielt werden. Hieraus resultiert insgesamt ein verbesserter Wirkungsgrad des Gespanns bestehend aus landwirtschaftlichem Arbeitsfahrzeug und angekoppeltem Anbaugerät, da beispielsweise keine zwangsweise Kopplung der Drehzahl des Verbrennungsmotors mit der beabsichtigen Betriebsart des Anbaugeräts erforderlich ist. Insoweit kann mit dem erfindungsgemäßen elektrischen Versorgungskonzept eine flexible und eine auf vorgebbare Zielsetzungen optimierte Ansteuerstrategie realisiert werden. Beispielsweise kann das Arbeitsfahrzeug und das Anbaugerät derart angesteuert bzw. betrieben werden, dass der Kraftstoffverbrauch des Verbrennungsmotors minimiert wird. Auch kann das Gespann derart angesteuert werden, dass die durchzuführenden Arbeitsschritte zeitoptimiert, also so schnell wie möglich ausgeführt werden. Mit entsprechender Leistungselektronik kann der Leistungsfluss der elektrischen Energie zwischen Arbeitsfahrzeug und Anbaugerät in gewissen Grenzen flexibel angesteuert werden.
Die vom Arbeitsfahrzeug auf das Arbeitsgerät übertragene Wechselspannung im Sinn der vorliegenden Erfindung umfasst insbesondere eine ein- und/oder mehrphasige Wechselspannung, Drehstrom, Sägezahnspannung, Rechteckpulse bzw. Spannungspulse.

Gemäß der Erfindung erzeugt der Generator Wechselspannung bzw. Wechselstrom. Der Generator weist bevorzugt eine Asynchronmaschine auf. In Abhängigkeit des jeweiligen Anwendungsfalls kann auch eine andere elektrische Maschine eingesetzt werden, beispielsweise eine Synchronmaschine. Der Generator wird vorzugsweise von dem Verbrennungsmotor des Arbeitsfahrzeugs angetrieben, und zwar unmittelbar von der Abtriebswelle oder vom Schwungrad des Verbrennungsmotors. Im Konkreten kann der Generator in Form eines Kurbelwellengenerators ausgebildet sein. Insoweit ist der Generator dauerhaft an dem Arbeitsfahrzeug angebaut und in den Antriebsstrang des Arbeitsfahrzeugs integriert und darauf abgestimmt.
Damit mit der von dem Generator erzeugten elektrischen Energie eine landwirtschaftliche Arbeitsfunktion ausgeführt werden kann, ist vorgesehen, dass der Generator eine Leistungsklasse aufweist, welche in der Lage ist, dauerhaft eine vorgebbare Mindestleistung erzeugen zu können. Im Konkreten ist der Generator derart ausgelegt, dass mit diesem eine elektrische Leistung von mindestens 10 kW, vorzugsweise 20 kW bis 30 kW, erzeugbar ist.
Zum Umwandeln von Wechselspannung in Gleichspannung kann mindestens ein Gleichrichter vorgesehen sein. Ein solcher Gleichrichter ist bevorzugt dort angeordnet, wo der Gleichstrom benötigt wird, also in räumlicher Nähe zu dem entsprechenden elektrischen Verbraucher. Dementsprechend kann ein Gleichrichter am Arbeitsfahrzeug und/oder am Anbaugerät vorgesehen sein.

In diesem Zusammenhang kann es zweckmäßig sein, einen Transformator und mindestens einen Gleichrichter in einer baulichen Einheit zusammenzufassen. Die bauliche Einheit kann in einem Gehäuse und/oder einer Kiste angeordnet sein.

Falls das Anbaugerät einen elektrischen Verbraucher aufweist, welcher mit Gleichstrom bzw. Gleichspannung zu versorgen ist, ist gemäß einer bevorzugten Ausführungsform vorgesehen, dass das Anbaugerät mindestens einen Gleichrichter aufweist. Mit dem Gleichrichter wird die von dem Transformator umgewandelte Wechselspannung in Gleichspannung umgewandelt.

Gemäß einer besonders bevorzugten Ausführungsform weist das Arbeitsfahrzeug und/oder das Anbaugerät einen Umrichter auf, mit welchem Gleichspannung in eine Wechselspannung vorgebbarer Frequenz und Amplitude umwandelbar ist. Insoweit stellt der Umrichter dem elektrischen Verbraucher Wechselspannung zur Verfügung und zwar vorzugsweise derart, dass die Wechselspannung in Frequenz und Amplitude den aktuell vorliegenden Anforderungen des elektrischen Verbrauchers bzw. der von dem elektrischen Verbraucher angetriebenen landwirtschaftlichen Arbeitsfunktion zumindest weitgehend entspricht.

Falls die mit dem Generator des Arbeitsfahrzeugs erzeugte elektrische Energie in ein massebezogenes Netz eingespeist werden soll oder falls beispielsweise an das Arbeitsfahrzeug ein herkömmlicher elektrischer Verbraucher, der mit Drehstrom oder Wechselstrom zu betreiben ist, anzuschließen ist, ist bevorzugt vorgesehen, dass der Transformator derart ausgebildet und beschaltet ist, dass die Sekundärseite des Transformators einen Sternpunkt oder einen Neutralleiter aufweist.

Aus Gründen der Sicherheit am Arbeitsfahrzeug und/oder am Anbaugerät kann es zweckmäßig sein, dass mit dem Transformator sekundärseitig eine Spannung von maximal 60 V erzeugbar ist. Es kann auch zweckmäßig sein, mit dem Transformator eine Hochspannung zu erzeugen, welche beispielsweise beim Spritzen von Flüssigkeiten zum elektrostatischen Aufladen von Flüssigkeitstropfen nutzbar ist.

Gemäß einer bevorzugten Ausführungsform ist der Transformator derart ausgebildet und beschaltet, dass mindestens zwei voneinander unabhängige Einzelspannungen zur Verfügung stellbar sind. So kann eine Einzelspannung von 12 V zur Versorgung von Controllern und elektronischen Steuergeräten vorgesehen sein. Eine weitere, davon unabhängige Einzelspannung kann 42 V betragen und zum Antreiben von Leistungsaggregaten bzw. elektrischen Lasten zum Ausführen einer landwirtschaftlichen Arbeitsfunktion dienen. Dies kann auch durch das Vorsehen eines entsprechenden sekundärseitigen Stromkreises realisiert werden.

Falls für ein Anbaugerät mindestens zwei im Wesentlichen gleichartige elektrische Verbraucher zu versorgen sind, kann der Transformator entsprechend ausgebildet und beschaltet sein bzw. es kann sekundärseitig ein entsprechender Stromkreis vorgesehen und derart ausgebildet sein, dass dies möglich ist.

Bevorzugt ist mindestens ein elektrischer Filter vorgesehen, mit welchem elektrische Störsignale ausfilterbar sind. Hiermit sollen hauptsächlich unerwünschte Spannungsspitzen ausgefiltert werten. Alternativ oder zusätzlich kann der elektrische Filter derart ausgebildet sein, dass mit diesem ein vorliegender Spannungsverlauf in einen vorgebbaren Spannungsverlauf umwandelbar ist. Dies ist insbesondere dann zweckmäßig, falls auf der Eingangsseite des Filters eine Rechteckspannung vorliegt, welche ausgangsseitig nach dem Filter in eine im Wesentlichen sinusförmige Wechselspannung umzuwandeln ist. Der Filter kann eine Kombination von Kapazitäten und Induktivitäten aufweisen.

Insbesondere für den Fall, dass das Anbaugerät einen elektrischen Antrieb auf der linken Seite und einen weiteren elektrischen Antrieb auf der rechten Seite aufweist, weist gemäß einer bevorzugten Ausführungsform das Anbaugerät mindestens zwei Transformatoren auf. Auch wenn das Anbaugerät mehrere Sektionen aufweist, beispielsweise eine Spritze mit mehreren Klappgestängeabschnitten, kann in jeder Sektion jeweils mindestens ein Transformator angeordnet sein.

Vergleichbares kann vorgesehen sein, falls das Anbaugerät modular aufgebaut und/oder um eine landwirtschaftliche Arbeitsfunktion erweiterbar ist. Auch in diesem Fall kann das Anbaugerät mindestens zwei Transformatoren aufweisen und es kann jedem Modul jeweils mindestens ein Transformator zugeordnet sein. So kann beispielsweise ein Sägerät modular aufgebaut sein und dadurch verbreitert bzw. vergrößert werden, indem weitere Sägerätmodule an ein Grundmodul angebaut werden. Sämtliche Sägerätmodule können jeweils einen Transformator aufweisen. Dieses Konzept ist für eine Einzelkornsämaschine besonders geeignet.

Bevorzugt weist der vom Generator erzeugte Wechselstrom und/oder der vom Arbeitsfahrzeug auf das Anbaugerät übertragene Wechselstrom einen ein- oder mehrphasigen Wechselstrom auf. Unter Umständen kann vorgesehen sein, dass der Traktor sowohl eine Schnittstelle für einphasigen Wechselstrom als auch eine Schnittstelle für mehrphasigen Wechselstrom für ein Anbaugerät zur Verfügung stellt. Somit können Anbaugeräte unterschiedlicher elektrischer Bauformen bzw. Eigenschaften an das Arbeitsfahrzeug angekoppelt und von diesem mit elektrischer Energie versorgt werden.

Gemäß einer bevorzugten Ausführungsform ist ein Transformator vorgesehen und derart ausgebildet und/oder elektrisch beschaltet, dass ein Teil des elektrischen Versorgungsnetzes bzw. ein Teil der Übertragungseinrichtung gegenüber dem Rest des elektrischen Versorgungsnetzes bzw. gegenüber dem Rest der Übertragungseinrichtung galvanisch isolierbar ist. Im Konkreten kann dieser Transformator in Form eines Trenn- oder Isoliertransformators ausgebildet sein. Ein solcher Transformator kann unmittelbar vor oder nach einer elektrischen Schnittstelle zwischen dem Arbeitsfahrzeug und dem Anbaugerät arbeitsgeräteseitig und/oder anbaugeräteseitig angeordnet sein.

Bevorzugt sind auf dem Anbaugerät mindestens zwei Teilstromkreise mit voneinander verschiedenen Spannungsebenen vorgesehen. Dies kann auch auf dem Arbeitsfahrzeug vorgesehen sein. Die beiden Teilstromkreise weisen bevorzugt eine niedrige Spannungsebene zur Versorgung elektronischer Steuergeräte und eine höhere Spannungsebene zur Versorgung von Elektromotoren auf.

Nicht zuletzt aus Gründen der Sicherheit kann das Arbeitsfahrzeug und/oder das Anbaugerät ein elektrisches Verteilersystem mit einem Stromkreis aufweisen. Mit dem elektrischen Verteilersystem kann elektrischer Strom an mindestens einen elektrischen Verbraucher übertragen werden. Der Stromkreis kann einen Wechselstromkreis oder einen Gleichstromkreis aufweisen, was in der Regel von der elektrischen Last abhängig ist.

Da die elektrischen Leistungskomponenten bzw. Verbraucher des Anbaugeräts mitunter bei hohen Leistungen betrieben werden, kann eine Kühlung der elektrischen Komponenten bereitgestellt sein. Hierzu kann ein auf dem Anbaugerät vorhandener Stoffstrom genutzt werden. Als ein solcher Stoffstrom kommt insbesondere Spritzbrühe, Saatgut und/oder Dünger in Frage.

Alternativ oder zusätzlich kann zur Kühlung elektrischer Komponenten des Anbaugeräts ein auf dem Anbaugerät vorhandener Luftstrom genutzt werden. Beispiele für Luftströme sind: Trägerluft zum Sprühen oder Spritzen, Trägerluft zum Fördern von Saatgut.

Darüber hinaus kann mindestens eine elektrische Komponente des Anbaugeräts mit einer Tragestruktur des Anbaugeräts thermisch verbunden sein. Hierbei wird also zumindest ein Teil der Wärme auf Grund der Wärmeleitfähigkeit zwischen der elektrischen Komponente und der Tragestruktur des Anbaugeräts von der elektrischen Komponente abgeführt. Eine konkrete Maßnahme hierfür kann eine thermische Kopplung zwischen dem Transformator und einer Tragestruktur des Anbaugeräts sein. Dies kann durch das Vergießen des Transformators mit einem Gießharz hoher Wärmeleitfähigkeit erzielt werden.

Alternativ oder zusätzlich ist mindestens eine elektrische Komponente des Anbaugeräts mit einem auf dem Anbaugerät vorhandenen Kreislauf kühlbar. Ein solcher Kreislauf kann beispielsweise ein Flüssigkeitskreislauf zum Antreiben von Hydromotoren des Anbaugeräts sein. In diesem Fall werden einzelne Komponenten des Anbaugeräts hydrostatisch und andere Komponenten elektrisch angetrieben, wobei beispielsweise eine Hydraulikleitung und/oder ein entsprechender Wärmetauscher in thermischem Kontakt zu der zu kühlenden elektrischen Komponente steht.

In einer bevorzugten Ausführungsform ist der Transformator mit einer rechteckförmigen Spannung - insbesondere mit Spannungspulsen - speisbar. Die rechteckförmige Spannung kann von einem Umrichter erzeugt bzw. ausgegeben werden. Die rechteckförmige Spannung kann pulsweiten- und/oder frequenz- und/oder amplitudenmoduliert sein.

Damit sich die Spannung und/oder der Strom und/oder die Leistung an die momentanen Anforderungen - insbesondere der landwirtschaftlichen Arbeitsfunktion - anpassen lässt, kann vorgesehen sein, dass die Pulsbreite der Rechteckspannung vorgebbar variabel ist. Alternativ oder zusätzlich kann zum Reduzieren bzw. Minimieren der Verlustleistung in Abhängigkeit von der momentan abgegebenen Leistung die Pulsfrequenz der Rechteckspannung vorgebbar variiert werden. Hierzu ist es zweckmäßig, entsprechende Sensoren und Ansteueralgorithmen zu implementieren, mit welchen die Pulsbreite und/oder die Pulsfrequenz variiert werden kann.

Besonders bevorzugt ist mindestens ein Mittel vorgesehen, mit welchem eine elektrische Isolierung an dem Arbeitsfahrzeug und/oder an dem Anbaugerät erzielbar und/oder überwachbar ist. Ein solches Mittel weist neben einer geeigneten Isolierung elektrischer Kabel auch mindestens eine elektrische Schaltung auf, mit welcher überwacht werden kann, ob die Vorrichtung zur elektrischen Versorgung auch hinreichend isoliert ist. Ein solches Mittel kann auch ausgebildet sein, Maßnahmen einzuleiten, falls das nicht mehr der Fall ist. So kann beispielsweise die Erzeugung des elektrischen Stroms abgeschaltet werden bzw. einzelne Teilstromkreise stromlos geschaltet werden. Weiterhin kann ein solches Mittel eine geeignete Isolation der elektrischen Schnittstelle zwischen Arbeitsfahrzeug und Anbaugerät aufweisen.

Gemäß einer bevorzugten Ausführungsform ist der Transformator in Form eines Ringbandkern-Transformators mit amorphem bzw. nanokristallinem Bandmaterial ausgeführt. Der Transformator oder ein weiterer Transformator kann auch in Form eines Trenntransformators, eines Spartransformators, eines Eisenkern-Transformators, eines Ferritkerntransformators, eines eisenlosen Transformators oder eines Streufeldtransformators ausgeführt sein.

Falls die Frequenz der Wechselspannung zu hoch für einen auf dem Prinzip des magnetischen Flusses arbeitenden Transformator ist, kann der Transformator in Form eines kapazitiven Spannungsteilers, d.h. einer Doppelkapazität, ausgeführt sein. Auch kann der Transformator ein Teil eines DC/DC-Wandlers sein. Erfindungsgemäss ist ein Netzwerk zur Datenübertragung vorgesehen, über welches eine Steuerelektronik des Anbaugeräts identifizierbar und/oder ansteuerbar ist. Ein solches Netzwerk wird unter anderem dazu eingesetzt, einen Umrichter des Arbeitsfahrzeugs zu konfigurieren. Ein solches Netzwerk kann einen CAN-Bus oder ein Ethernet-Datennetz, insbesondere ein echtzeitfähiges Ethernet-Datennetz, aufweisen.
Damit ein möglichst hoher Wirkungsgrad des Arbeitsfahrzeugs und/oder des Anbaugeräts erzielbar ist, kann ein Regelkreis vorgesehen sein, welcher einen dem Arbeitsfahrzeug zugeordneten Umrichter und/oder eine Steuereinrichtung aufweist. Der Regelkreis kann mit Sensoren und/oder Controllern des Anbaugeräts kommunizieren und ein Netzwerk zur Datenübertragung aufweisen. Mit diesem Regelkreis kann beispielsweise die oben erwähnte Pulsbreite und/oder Pulsfrequenz und/oder Amplitude einer Rechteckspannung geregelt werden. So kann beispielsweise vorgesehen sein, dass die Steuereinheit des Arbeitsgeräts über das Netzwerk unmittelbar mit Sensoren des Anbaugeräts kommuniziert und in Abhängigkeit der von den jeweiligen Sensoren detektierten Größen den Umrichter derart ansteuert, dass die elektrischen Verbraucher des Anbaugeräts hierdurch unmittelbar mit elektrischer Energie versorgt werden, ohne dass eine weitere Steuereinheit auf dem Anbaugerät vorzusehen ist.
Die Übertragungseinrichtung weist gemäß einer bevorzugten Ausführungsform eine elektrische Schnittstelle des Arbeitsfahrzeugs, mindestens eine elektrische Leitung und eine elektrische Schnittstelle des Anbaugeräts auf. Eine elektrische Schnittstelle kann mindestens eine Steckdose und/oder mindestens einen Stecker aufweisen. Die elektrische Leitung kann in Form eines flexiblen Kabels ausgebildet sein, mit welcher eine elektrische Verbindung zwischen dem Arbeitsfahrzeug und dem in der Regel relativ zum Arbeitsfahrzeug bewegbar angeordneten Anbaugerät hergestellt werden kann.
Ganz besonders bevorzugt weist die Übertragungseinrichtung mindestens einen Umrichter auf, welcher ortsfest an dem Arbeitsfahrzeug angeordnet ist. Dieser Umrichter wird derart konfiguriert, dass dieser von einem Gleichstrom-Zwischenstromkreis des Arbeitsfahrzeugs eine Wechselspannung und/oder Rechteckspannung vorgebbarer Frequenz bzw. Pulsbreite erzeugt und über die Übertragungseinrichtung dem Anbaugerät zur Verfügung stellt. Dies kann derart erfolgen, dass eine Steuereinrichtung beispielsweise über ein Netzwerk zur Datenübertragung das Anbaugerät bzw. die darauf befindlichen elektrischen Verbraucher automatisch erkennt und automatisch die elektrische Energie in der Form dem Anbaugerät zur Verfügung stellt, in welcher diese von dem Anbaugerät benötigt wird und/oder umgesetzt werden kann. Erfindungsgemäss weist das Anbaugerät eine elektrische Last, einen Transformator und eine elektrische Schnittstelle auf. Das Anbaugerät ist an eine Anbauschnittstelle des Arbeitsfahrzeugs reversibel ankoppelbar. Mit der elektrischen Last ist eine landwirtschaftliche Arbeitsfunktion ausführbar. Die elektrische Schnittstelle ist mit dem Transformator elektrisch verbunden und derart ausgebildet, dass diese an eine elektrische Schnittstelle eines Arbeitsfahrzeugs anschließbar ist und hierdurch eine Vorrichtung zur elektrischen Versorgung nach einem der Ansprüche 1 bis 14 ausbildbar ist. Mit dem Transformator ist die vom Generator des Arbeitsfahrzeugs erzeugte und auf das Anbaugerät übertragene Wechselspannung wandelbar, um der elektrischen Last zur Verfügung gestellt zu werden. Insbesondere kann vorgesehen sein, dass der Transformator in einem Gehäuse angeordnet ist.

Gemäß einer ebenfalls bevorzugten Ausführungsform der vorliegenden Erfindung weist ein insbesondere in Form eines Traktors ausgebildetes landwirtschaftliches Arbeitsfahrzeug eine Anbauschnittstelle, einen Generator und eine elektrische Schnittstelle auf. An der Anbauschnittstelle ist ein Anbaugerät mit mindestens einer elektrischen Last reversibel ankoppelbar. Mit der elektrischen Last des Anbaugeräts ist eine landwirtschaftliche Arbeitsfunktion ausführbar. Mit dem Generator ist elektrische Energie erzeugbar. Der Generator ist mit der elektrischen Schnittstelle elektrisch verbunden. Die elektrische Schnittstelle ist derart ausgebildet, dass diese an eine elektrische Schnittstelle des Anbaugeräts anschließbar ist und hierdurch eine Vorrichtung zur elektrischen Versorgung nach einem der Ansprüche 1 bis 14 ausbildbar ist. Die vom Generator des Arbeitsfahrzeugs erzeugte elektrische Energie ist in Form von Wechselspannung auf das Anbaugerät übertragbar.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnungen zu verweisen. In Verbindung mit der Erläuterung der bevorzugten Ausführungsbeispiele der Erfindung anhand der Zeichnungen werden auch im Allgemeinen bevorzugte Ausgestaltungen und Weiterbildungen der Lehre erläutert. In den Zeichnungen zeigen jeweils in einer schematischen Darstellung:
- Fig. 1: ein erstes Ausführungsbeispiel einer erfindungsgemäßen Vorrichtung zur elektrischen Versorgung eines landwirtschaftlichen Arbeitsfahrzeugs und eines daran angekoppelten Anbaugeräts,
- Fig. 2: ein Schaltbild eines Ausführungsbeispiels einer erfindungsgemäßen Vorrichtung eines landwirtschaftlichen Arbeitsfahrzeugs und eines daran angekoppelten Anbaugeräts,
- Fig. 3: ein Schaltbild eines weiteren Ausführungsbeispiels einer erfindungsgemäßen Vorrichtung eines landwirtschaftlichen Arbeitsfahrzeugs und eines daran angekoppelten Anbaugeräts,
- Fig. 4: ein Schaltbild einer elektrischen Schaltung, welche ein Teil einer erfindungsgemäßen Vorrichtung sein kann,
- Fig. 5: ein Schaltbild einer weiteren elektrischen Schaltung, welche ein Teil einer erfindungsgemäßen Vorrichtung sein kann,
- Fig. 6: ein Schaltbild eines elektrischen Filters, und
- Fig. 7: ein weiteres Ausführungsbeispiel einer erfindungsgemäßen Vorrichtung zur elektrischen Versorgung eines landwirtschaftlichen Arbeitsfahrzeugs und eines hiervon betriebenen elektrischen Verbrauchers.

Gleiche oder ähnliche Bauteile sind in den Figuren mit denselben Bezugszeichen gekennzeichnet.

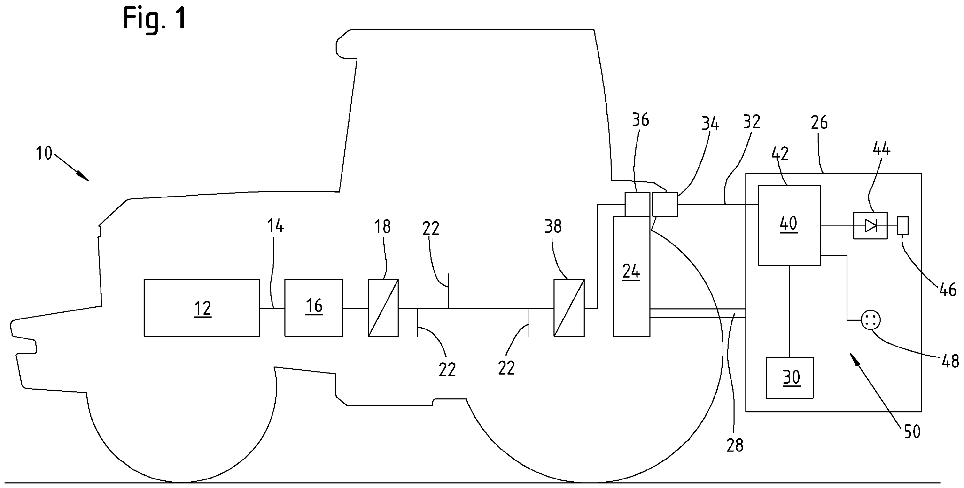

Fig. 1 zeigt ein landwirtschaftliches Arbeitsfahrzeug 10, welches in Form eines Traktors ausgebildet ist. Im Folgenden wird der Traktor ebenfalls mit dem Bezugszeichen 10 bezeichnet. Der Traktor 10 weist einen Verbrennungsmotor 12 auf. Von der Ausgangswelle 14 des Verbrennungsmotors 12 wird einerseits der Fahrantrieb des Traktors 10 über ein in Fig. 1 nicht gezeigtes Getriebe angetrieben. Andererseits treibt die Ausgangswelle 14 den Generator 16 an. Der Generator 16 ist fest am Traktor 10 installiert. Im Konkreten ist der Generator 16 in Form eines Kurbelwellengenerators ausgebildet und mit seinem Stator am Motorgehäuse und mit seinem Rotor am Schwungrad des Verbrennungsmotors 12 angebaut. Der Generator 16 erzeugt dreiphasigen Wechselstrom, welcher über den Umrichter 18 des Generators 16 und einen darin enthaltenen Gleichrichter in Gleichstrom umgewandelt wird. Der Gleichstrom wird in den Gleichstrom-Zwischenstromkreis 20 des Traktors 10 eingespeist. Die Spannung des Gleichstrom-Zwischenstromkreises 20 beträgt in etwa 700 V. Lediglich schematisch ist angedeutet, dass über die Abzweigungen 22 des Gleichstrom-Zwischenstromkreises 20 weitere, in Fig. 1 nicht gezeigte elektrische Verbraucher versorgt werden.

Der Traktor 10 weist eine mechanische Ankopplungsschnittstelle 24 auf, welche in Form eines Dreipunkt-Geräteanbaus, eines Zugpendels und/oder eines sonstigen gängigen Kopplungssystems ausgebildet sein kann. An die Ankopplungsschnittstelle 24 des Traktors 10 ist das Anbaugerät 26 über die mechanische Verbindung 28 angekoppelt. Das Anbaugerät 26 weist unter anderem eine landwirtschaftliche Arbeitsfunktion auf, welche mit einem Elektromotor 30 ausgeübt bzw. angetrieben wird. Der Elektromotor 30 des Anbaugeräts 26 wird von dem elektrischen Versorgungssystem des Traktors 10 mit elektrischer Energie versorgt. Hierzu ist das Anbaugerät 26 über die elektrische Leitung 32 und den Stecker 34 des Anbaugeräts 26 mit der Steckdose 36 des Traktors 10 verbunden. Die Steckdose 36 wiederum ist mit dem Umrichter 38 elektrisch verbunden. Der Umrichter 38 wandelt den Gleichstrom des Gleichstrom-Zwischenstromkreises 20 in Wechselstrom um. Die Wechselspannung liegt in einem Bereich von ungefähr 400 V bis 480 V. Der vom Umrichter 38 gewandelte Wechselstrom wird über die Leitung 32 dem Transformator 40 zugeführt. Dementsprechend wird der Transformator 40 primärseitig mit einer Wechselspannung von 400 V bis 480 V beaufschlagt. Der Transformator 40 ist an dem Anbaugerät 26 vorgesehen und dort fest in einem Gehäuse 42 montiert. Insoweit stellt der Transformator 40 und das Gehäuse 42 eine bauliche Einheit dar.

Der Transformator 40 wandelt die primärseitige Wechselspannung in Höhe von 400 V bis 480 V in eine sekundärseitige Wechselspannung von 200 bis 240 V. Dementsprechend wird der Elektromotor 30 und letztendlich die landwirtschaftliche Arbeitsfunktion mit dieser Wechselspannung angetrieben. An den Transformator 40 ist ein Gleichrichter 44 angeschlossen, welcher aus der sekundärseitigen Wechselspannung Gleichspannung erzeugt und diese über eine Steckdose 46 einem an das Anbaugerät 26 adaptierbaren elektrischen Verbraucher (nicht gezeigt, da nicht an das Anbaugerät 26 adaptiert) zur Verfügung stellt. Weiterhin ist eine Drehstrom-Steckdose 48 vorgesehen, über welche ein elektrischer Verbraucher anschließbar ist (in Fig. 1 nicht gezeigt), welcher mit Drehstrom betrieben wird. Insoweit weist bereits das Anbaugerät 26 ein elektrisches Verteilersystem 50 auf, mit welchem elektrischer Strom an mehrere elektrische Verbraucher, unter anderem dem fest am Anbaugerät 26 installierten Elektromotor 30, zur Verfügung gestellt werden kann.

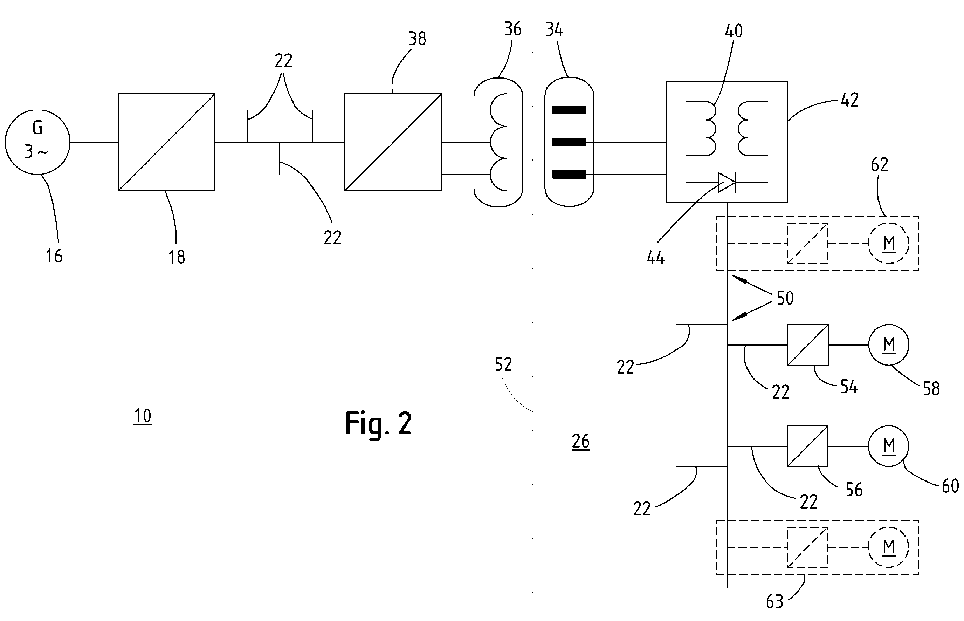

Fig. 2 zeigt in einer schematischen Darstellung das Schaltbild einer erfindungsgemäßen Vorrichtung zur Versorgung eines landwirtschaftlichen Arbeitsfahrzeugs und eines an das Arbeitsfahrzeug ankoppelbaren Anbaugeräts, wobei weder das Arbeitsfahrzeug noch das Anbaugerät in Fig. 2 gezeigt ist. Von der elektrischen Wirkungsweise unterscheidet sich die Vorrichtung zur Versorgung des Arbeitsfahrzeugs 10 und des Anbaugeräts 26 nicht wesentlich von der aus Fig. 1. Auch bei dieser Vorrichtung wird mit dem Generator 16 Wechselspannung erzeugt, welche mit dem Umrichter/Gleichrichter 18 in Gleichspannung umgewandelt wird. Die Gleichspannung wird dem Gleichstrom-Zwischenstromkreis 20 zur Verfügung gestellt. Der Umrichter 38 wandelt die Gleichspannung in dreiphasige Wechselspannung um, welche an der Steckdose 36 des Arbeitsfahrzeugs 10 anliegt. Wenn der Stecker 34 in die Steckdose 36 eingesteckt ist, kann die Wechselspannung auf das Anbaugerät 26 übertragen werden. Die Trennung zwischen dem Arbeitsfahrzeug 10 und dem Anbaugerät 26 in Fig. 2 ist mit der gestrichelten Linie 52 angedeutet. Die Wechselspannung wird dem Transformator 40 zugeleitet, welcher die Wechselspannung auf ein niedrigeres Spannungsniveau wandelt. Mit dem ebenfalls in dem Gehäuse 42 angeordneten Gleichrichter 44 wird die sekundärseitige Wechselspannung in Gleichspannung umgewandelt und dem elektrischen Verteilersystem 50 des Anbaugeräts 26 zugeführt. Das elektrische Verteilersystem 50 weist ebenfalls einen Gleichstrom-Zwischenstromkreis mit Abzweigungen 22 für weitere (in Fig. 2 nicht gezeigte) elektrische Verbraucher auf. An dem elektrischen Verteilersystem 50 sind zwei Umrichter 54, 56 angeschlossen, welche die Gleichspannung des Gleichstromzwischenkreises des Anbaugeräts 26 jeweils in einphasigen Wechselstrom umwandeln. Mit dem Wechselstrom ist jeweils ein Elektromotor 58, 60 antreibbar, welcher letztendlich die landwirtschaftliche Arbeitsfunktion ausführt.

Das Anbaugerät 26 gemäß Fig. 2 ist in Form einer Einzelkornsämaschine ausgebildet und weist zwei Module auf, nämlich ein Modul auf der linken und ein Modul auf der rechten Seite des Anbaugeräts 26. Die Einzelkornsämaschine ist um weitere Module erweiterbar, wobei einem Erweiterungsmodul jeweils ein weiterer Gleichrichter und ein weiterer Elektromotor zugeordnet ist. Dies ist mit den gestrichelt gezeigten elektrischen Erweiterungsmodulen 62, 63 gezeigt, welche jeweils einen Umrichter und einen Elektromotor aufweisen.

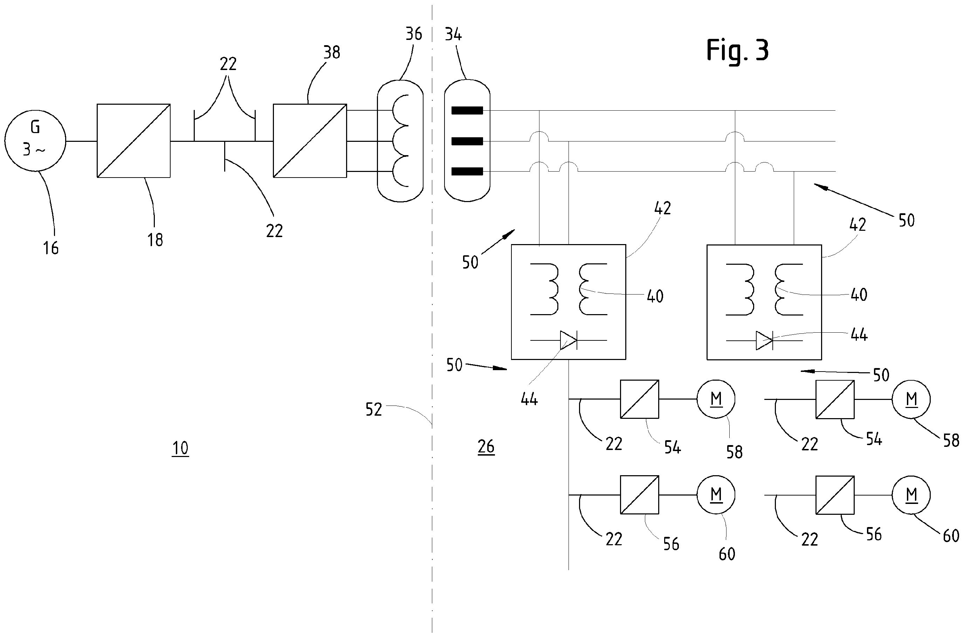

In Fig. 3 ist ein elektrisches Schaltbild gezeigt, welches arbeitsfahrzeugseitig vergleichbar zu dem aus Fig. 2 ausgebildet ist. Auch hinsichtlich des Anbaugeräts 26 ist dieses weitgehend vergleichbar zu dem aus Fig. 2 ausgebildet. Allerdings weist das Anbaugerät 26 aus Fig. 3 zwei Gehäuse 42 mit jeweils einem Transformator 40 und einem Gleichrichter 44 auf. Die beiden Transformatoren 40 sind parallel an dem elektrischen Verteilersystem 50 angeschlossen und wandeln den vom Arbeitsfahrzeug 10 zur Verfügung gestellten Drehstrom in Drehstrom kleinerer Spannung um. Mit den Gleichrichtern 44 wird der jeweilige Gleichstrom-Zwischenstromkreis mit Gleichspannung versorgt. An jedem Gleichstrom-Zwischenstromkreis können mehrere Umrichter-Elektromotor-Kombinationen angeschlossen werden. Auch die elektrische Ausrüstung des Anbaugeräts 26 aus Fig. 3 ist somit erweiterbar und skalierbar für die jeweilige Ausbaustufe des Anbaugeräts 26.

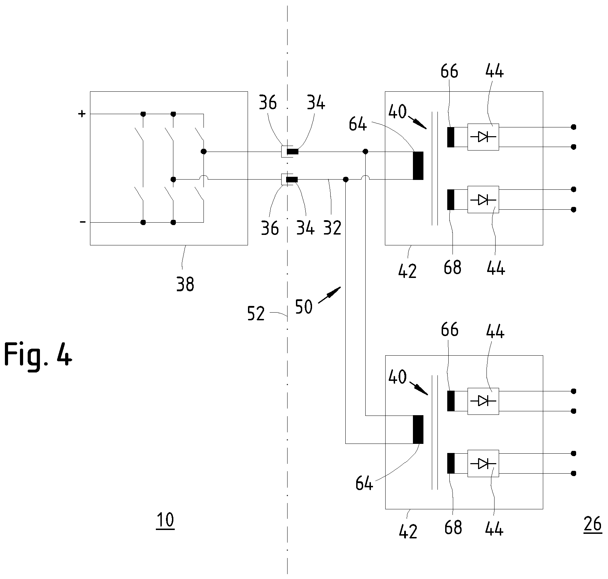

Fig. 4 zeigt einen Ausschnitt eines elektrischen Schaltkreises, welcher ein Beispiel für die Übertragung eines einphasigen Wechselstroms von dem Arbeitsfahrzeug 10 auf das Anbaugerät 26 darstellt. Arbeitsfahrzeugseitig ist lediglich der Umrichter 38 gezeigt, welcher links mit dem Gleichstromzwischenstromkreis 20 verbunden ist (gekennzeichnet durch die Symbole + und -). Rechts ist der Umrichter 38 mit der Steckdose 36 verbunden. Zum Erzeugen der einphasigen Wechselspannung sind lediglich vier der sechs Schalter des Umrichters 38 anzusteuern. Die auf das Anbaugerät 26 übertragene Wechselspannung beträgt 480 V. Elektrisch parallel zum Stecker 34 verschaltet sind zwei Gehäuse 42 vorgesehen, in welchen jeweils ein Transformator 40 angeordnet ist. Der Transformator 40 weist primärseitig eine Spule 64 und sekundärseitig zwei Spulen 66, 68 auf. Die erste sekundärseitige Spule 66 wandelt die Eingangsspannung in eine Wechselspannung von 12 V um. Die zweite sekundärseitige Spule 68 wandelt die Eingangsspannung in eine Wechselspannung von 42 V um. Den sekundärseitigen Spulen 66, 68 sind zwei Gleichrichter 44 nachgeordnet, welche die jeweilige Wechselspannung in Gleichspannung umwandeln. Dementsprechend kann nach dem einen Gleichrichter 44 ein Controller oder eine elektronische Steuereinheit angeschlossen werden, welche eine Versorgungsspannung von 12 V benötigt. Nach dem anderen Gleichrichter 44 kann ein Leistungsteil angeschlossen werden, welches mit 24 V Gleichspannung versorgt wird. Insoweit sind bei dem Anbaugerät 26 zwei Teilstromkreise vorgesehen, welche verschiedene Spannungsebenen aufweisen. Auch das Anbaugerät 26 gemäß Fig. 4 ist um weitere Gehäuse 42 mit im Wesentlichen identischen Inhalten erweiterbar.

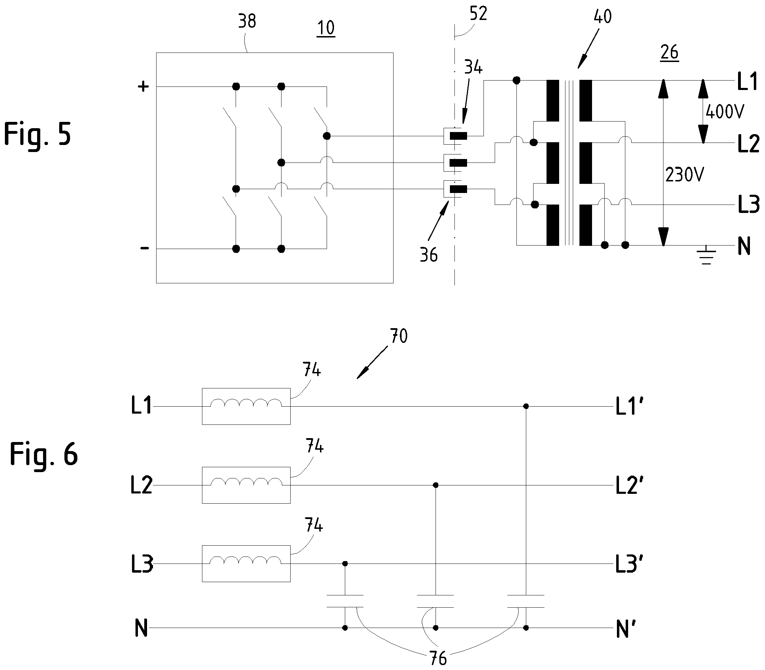

Fig. 5 zeigt einen Ausschnitt eines elektrischen Schaltkreises, welcher ein Beispiel für die Übertragung eines dreiphasigen Wechselstroms von dem Arbeitsfahrzeug 10 auf das Anbaugerät 26 darstellt. Arbeitsfahrzeugseitig ist - wie in Fig. 4 - lediglich der Umrichter 38 gezeigt, welcher links mit dem Gleichstromzwischenstromkreis 20 verbunden ist (gekennzeichnet durch die Symbole + und -). Anbaugeräteseitig ist ein dreiphasiger Transformator 40 vorgesehen, welcher in Form eines Trenntransformators ausgebildet ist und somit eine galvanische Trennung zwischen den elektrischen Systemen des Arbeitsfahrzeugs 10 und des Anbaugeräts 26 realisiert. Der Transformator 40 ist derart ausgebildet und beschaltet, dass damit sekundärseitig Drehstrom mit drei Phasen und einem Neutralleiter zur Verfügung gestellt werden kann. Mit dem sekundärseitigen Drehstrom kann ein elektrischer Verbraucher zum Ausführen einer landwirtschaftlichen Arbeitsfunktion betrieben werden. Dieser ist in Fig. 5 nicht gezeigt.

Fig. 6 zeigt einen elektrischen Filter 70, mit welchem elektrische Störsignale ausgefiltert werden können und/oder mit welchem ein Rechteck-Spannungsverlauf in einen im Wesentlichen sinusförmigen Spannungsverlauf überführt werden kann. Dieser Filter 70 kann bei Bedarf in jedem der Anbaugeräte 26 gemäß den Fig. 1 bis 5 eingesetzt werden. Beispielsweise kann ein solcher Filter 70 zwischen dem Transformator 40 und der Drehstromsteckdose 48 des Anbaugeräts 26 aus Fig. 1 eingesetzt werden. Der Filter 70 weist Spulen 74 und Kondensatoren 76 auf.

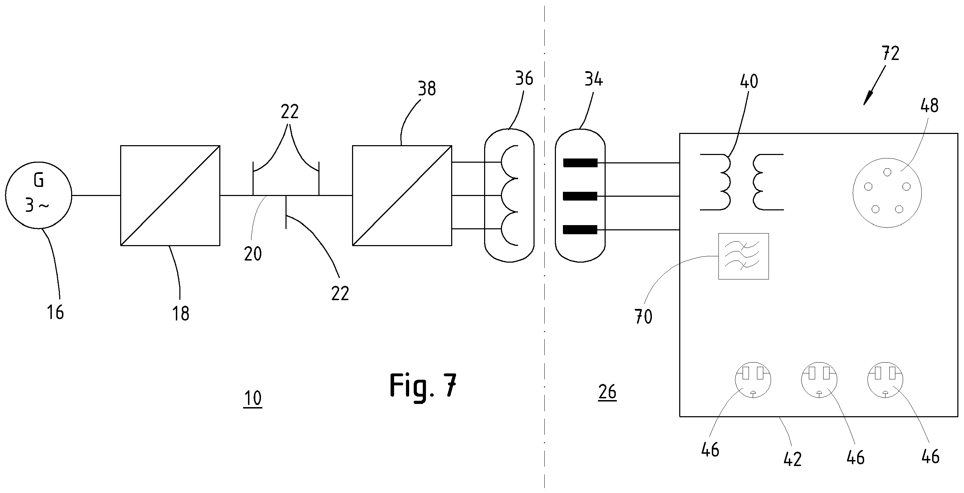

Fig. 7 zeigt in einem elektrischen Schaltbild elektrische Komponenten des Arbeitsfahrzeugs 10, welche vergleichbar zu denen aus den Fig. 2 und 3 ausgebildet sind. An die Steckdose 36 des Arbeitsfahrzeugs 10 ist eine elektrische Wandlereinrichtung 72 anschließbar. Mit der elektrischen Wandlereinrichtung 72 kann die von dem Generator 16 des Arbeitsfahrzeugs 10 erzeugte elektrische Energie gewandelt werden. Die elektrische Wandlereinrichtung 72 umfasst einen Transformator 40, ein Gehäuse 42 und die elektrischen Schnittstellen 34, 46, 48. Die eine elektrische Schnittstelle 34 dient zum Herstellen der Leitungsverbindung mit dem Arbeitsfahrzeug 10. Die anderen beiden elektrischen Schnittstellen 46, 48 dienen als Steckdose, an welche elektrische Verbraucher (in Fig. 7 nicht gezeigt) anschließbar sind. Der Transformator 40 ist in dem Gehäuse 42 angeordnet. Der Transformator 40 ist mit der ersten elektrischen Schnittstelle 34 primärseitig elektrisch verbunden.

In Fig. 1 ist also ein Anbaugerät 26 mit einer elektrischen Last, einem Transformator 40 und einer elektrischen Schnittstelle gezeigt. Das Anbaugerät 26 ist an die Anbauschnittstelle 24 des Arbeitsfahrzeugs 10 reversibel ankoppelbar. Mit der elektrischen Last, welche in Form eines Elektromotors 30 ausgebildet ist, kann eine landwirtschaftliche Arbeitsfunktion ausgeführt werden. Die elektrische Schnittstelle ist in Form eines Steckers 34 ausgebildet. Die elektrische Schnittstelle ist mit dem Transformator 40 elektrisch verbunden und derart ausgebildet, dass diese an eine elektrische Schnittstelle - an die Steckdose 36 - des Arbeitsfahrzeugs 10 anschließbar ist. Hierdurch ist eine Vorrichtung zur elektrischen Versorgung nach einem der Ansprüche 1 bis 14 ausbildbar. Mit dem Transformator 40 ist die vom Generator 16 des Arbeitsfahrzeugs 10 erzeugte und auf das Anbaugerät 26 übertragene Wechselspannung wandelbar, um der elektrischen Last zur Verfügung gestellt zu werden. Der Transformator 40 ist in einem Gehäuse 42 angeordnet.

Fig. 1 zeigt des Weiteren das landwirtschaftliche Arbeitsfahrzeug 10, nämlich den Traktor 10. Das Arbeitsfahrzeug 10 weist eine Anbauschnittstelle 24, einen Generator 16 und eine elektrische Schnittstelle 36 auf. An der Anbauschnittstelle 24 ist ein Anbaugerät 26 mit mindestens einer elektrischen Last - hier in Gestalt des Elektromotors 30 - reversibel ankoppelbar. Mit der elektrischen Last des Anbaugeräts 26 ist eine landwirtschaftliche Arbeitsfunktion ausführbar. Mit dem Generator 16 ist elektrische Energie erzeugbar. Der Generator 16 ist mit der elektrischen Schnittstelle 36 elektrisch verbunden. Die elektrische Schnittstelle 36 ist derart ausgebildet, dass diese an eine elektrische Schnittstelle 34 des Anbaugeräts 26 anschließbar ist. Hierdurch ist eine Vorrichtung zur elektrischen Versorgung nach einem der Ansprüche 1 bis 14 ausbildbar. Die vom Generator 16 des Arbeitsfahrzeugs 10 erzeugte elektrische Energie ist in Form von Wechselspannung auf das Anbaugerät 26 übertragbar.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zur elektrischen Versorgung eines an ein Arbeitsfahrzeug ankoppelbaren Anbaugeräts, wobei das Arbeitsfahrzeug (10) einen Generator (16) und eine Anbauschnittstelle (24) aufweist, wobei mittels des Generators (16) elektrische Energie erzeugbar ist, wobei an der Anbauschnittstelle (24) ein Anbaugerät (26) an das Arbeitsfahrzeug (10) reversibel ankoppelbar ist, wobei das Anbaugerät (26) mindestens eine elektrische Last (30, 58, 60) aufweist, mit welcher eine landwirtschaftliche Arbeitsfunktion ausführbar ist, wobei die Vorrichtung eine Übertragungseinrichtung (32) und mindestens einen Transformator (40) aufweist, wobei mit der Übertragungseinrichtung (32) die vom Generator (16) des Arbeitsfahrzeugs (10) erzeugte elektrische Energie in Form von Wechselspannung auf das Anbaugerät (26) übertragbar ist, wobei der Transformator (40) am Anbaugerät (26) vorgesehen ist, und wobei mit dem Transformator (40) die übertragene Wechselspannung wandelbar ist, um der elektrischen Last (30, 58, 60) zur Verfügung gestellt zu werden, **dadurch gekennzeichnet, dass** ein Netzwerk zur Datenübertragung vorgesehen ist, über welches eine Steuerelektronik des Anbaugeräts (26) identifizierbar und/oder ansteuerbar ist, wobei mittels des Netzwerks ein dem Arbeitsfahrzeug (10) zugeordneter und von einem Gleichstrom-Zwischenstromkreis (20) des Arbeitsfahrzeugs (10) gespeister Umrichter (38) konfigurierbar ist.

2. Vorrichtung nach Anspruch 1, **dadurch gekennzeichnet, dass** das Anbaugerät (26) mindestens einen Gleichrichter (44) aufweist, mit welchem die von dem Transformator (40) umgewandelte Wechselspannung in Gleichspannung umwandelbar ist.

3. Vorrichtung nach Anspruch 1 oder 2, **dadurch gekennzeichnet, dass** das Arbeitsfahrzeug (10) und/oder das Anbaugerät (26) einen Umrichter (54, 56) aufweist, mit welchem Gleichspannung in eine Wechselspannung vorgebbarer Frequenz und Amplitude umwandelbar ist.

4. Vorrichtung nach einem der Ansprüche 1 bis 3, **dadurch gekennzeichnet, dass** der Transformator (40) derart ausgebildet und beschaltet ist, dass die Sekundärseite des Transformators (40) einen Sternpunkt oder einen Neutralleiter aufweist, so dass die elektrische Energie in ein massebezogenes Netz eingespeist werden kann.

5. Vorrichtung nach einem der Ansprüche 1 bis 4, **dadurch gekennzeichnet, dass** mindestens ein elektrischer Filter (70) vorgesehen ist, mit welchem elektrische Störsignale ausfilterbar sind und/oder mit welchem ein vorliegender Spannungsverlauf in einen vorgebbaren Spannungsverlauf umwandelbar ist.

6. Vorrichtung nach einem der Ansprüche 1 bis 5, **dadurch gekennzeichnet, dass** das Anbaugerät (26) mindestens zwei Transformatoren (40) aufweist und dass vorzugsweise das Anbaugerät (26) mindestens zwei Sektionen aufweist, wobei in jeder Sektion jeweils mindestens ein Transformator (40) angeordnet ist.

7. Vorrichtung nach einem der Ansprüche 1 bis 6, **dadurch gekennzeichnet, dass** das Anbaugerät (26) mindestens zwei Transformatoren (40) aufweist und dass vorzugsweise das Anbaugerät (26) modular aufgebaut und/oder um eine landwirtschaftliche Arbeitsfunktion erweiterbar ist, wobei jedem Modul jeweils mindestens ein Transformator (40) zugeordnet ist.

8. Vorrichtung nach einem der Ansprüche 1 bis 7, **dadurch gekennzeichnet, dass** ein Transformator (40) vorgesehen und derart ausgebildet und/oder elektrisch beschaltet ist, dass ein Teil des elektrischen Versorgungsnetzes (50) oder ein Teil der Übertragungseinrichtung gegenüber dem Rest des elektrischen Versorgungsnetzes (50) oder gegenüber dem Rest der Übertragungseinrichtung galvanisch isolierbar ist.

9. Vorrichtung nach einem der Ansprüche 1 bis 8, **dadurch gekennzeichnet, dass** auf dem Anbaugerät (26) mindestens zwei Teilstromkreise mit voneinander verschiedenen Spannungsebenen vorgesehen sind, vorzugsweise einer niedrigen Spannungsebene zur Versorgung elektronischer Steuergeräte und einer höheren Spannungsebene zur Versorgung von Elektromotoren (58, 60).

10. Vorrichtung nach einem der Ansprüche 1 bis 9, **dadurch gekennzeichnet, dass** zur Kühlung elektrischer Komponenten des Anbaugeräts (26) ein auf dem Anbaugerät (26) vorhandener Stoffstrom nutzbar ist, insbesondere Spritzbrühe, Saatgut und/oder Dünger.

11. Vorrichtung nach einem der Ansprüche 1 bis 10, **dadurch gekennzeichnet, dass** zur Kühlung elektrischer Komponenten des Anbaugeräts (26) ein auf dem Anbaugerät (26) vorhandener Luftstrom nutzbar ist, insbesondere von Trägerluft zum Sprühen oder Spritzen und/oder zum Fördern von Saatgut.

12. Vorrichtung nach einem der Ansprüche 1 bis 11, **dadurch gekennzeichnet, dass** mindestens eine elektrische Komponente des Anbaugeräts (26) mit einem auf dem Anbaugerät (26) vorhandenen Kreislauf kühlbar ist, beispielsweise mit einem Flüssigkeitskreislauf zum Antreiben von Hydromotoren.

13. Vorrichtung nach einem der Ansprüche 1 bis 12, **dadurch gekennzeichnet, dass** mindestens ein Mittel vorgesehen ist, mit welchem eine elektrische Isolierung an dem Arbeitsfahrzeug (10) und/oder an dem Anbaugerät (26) erzielbar und/oder überwachbar ist.

14. Anbaugerät mit einer elektrischen Last (30, 58, 60), einem Transformator (40) und einer elektrischen Schnittstelle (34), wobei das Anbaugerät (26) an eine Anbauschnittstelle (24) des Arbeitsfahrzeugs (10) reversibel ankoppelbar ist, wobei mit der elektrischen Last (30, 58, 60) eine landwirtschaftliche Arbeitsfunktion ausführbar ist, wobei die elektrische Schnittstelle (34) mit dem Transformator (40) elektrisch verbunden und derart ausgebildet ist, dass diese an eine elektrische Schnittstelle (36) eines Arbeitsfahrzeugs (10) anschließbar, wobei mit dem Transformator (40) die vom Generator (16) des Arbeitsfahrzeugs (10) erzeugte und auf das Anbaugerät (26) übertragene Wechselspannung wandelbar ist, um der elektrischen Last (30, 58, 60) zur Verfügung gestellt zu werden, und wobei der Transformator (40) in einem Gehäuse (42) angeordnet sein kann, **dadurch gekennzeichnet, dass** das Anbaugerät eine Vorrichtung nach einem der Ansprüche 1 bis 13 aufweist.

15. Landwirtschaftliches Arbeitsfahrzeug, insbesondere Traktor, wobei das Arbeitsfahrzeug (10) eine Anbauschnittstelle (24), einen Generator (16) und eine elektrische Schnittstelle (36) aufweist, wobei an der Anbauschnittstelle (24) ein Anbaugerät (26) mit mindestens einer elektrischen Last (30, 58, 60) reversibel angekoppelt ist, wobei mit der elektrischen Last (30, 58, 60) des Anbaugeräts (26) eine landwirtschaftliche Arbeitsfunktion ausführbar ist, wobei mit dem Generator (16) elektrische Energie erzeugbar ist, wobei der Generator (16) mit der elektrischen Schnittstelle (36) elektrisch verbunden ist, wobei die elektrische Schnittstelle (36) derart ausgebildet ist, dass diese an eine elektrische Schnittstelle (34) des Anbaugeräts (26) anschließbar ist und wobei die vom Generator (16) des Arbeitsfahrzeugs (10) erzeugte elektrische Energie in Form von Wechselspannung auf das Anbaugerät (26) übertragbar ist, **gekennzeichnet durch** eine Vorrichtung nach einem der Ansprüche 1 bis 13.

## Claims

1. Device for supplying electricity to an attachment which can be coupled to a utility vehicle, wherein the utility vehicle (10) has a generator (16) and an attachment interface (24), wherein electrical energy can be generated by means of the generator (16), wherein at the attachment interface (24) an attachment (26) can be reversibly coupled to the utility vehicle (10), wherein the attachment (26) has at least one electrical load (30, 58, 60) with which an agricultural working function can be carried out, wherein the device has a transmission device (32) and at least one transformer (40), wherein the electrical energy which is generated by the generator (16) of the utility vehicle (10) can be transmitted in the form of alternating voltage to the attachment (26) by means of the transmission device (32), wherein the transformer (40) is provided on the attachment (26), and wherein the transmitted alternating voltage can be converted by means of the transformer (40) in order to be made available to the electrical load (30, 58, 60), **characterized in that** a network is provided for transmitting data, by means of which network an electronic control system of the attachment (26) can be identified and/or actuated, wherein an inverter (38) which is assigned to the utility vehicle (10) and is fed by a DC intermediate circuit (20) of the utility vehicle (10) can be configured by means of the network.

2. Device according to Claim 1, **characterized in that** the attachment (26) has at least one rectifier (44) by means of which the alternating voltage which is converted by the transformer (40) can be converted into direct voltage.

3. Device according to Claim 1 or 2, **characterized in that** the utility vehicle (10) and/or the attachment (26) has a power converter (54, 56) by means of which direct voltage can be converted into an alternating voltage of predefinable frequency and amplitude.

4. Device according to one of Claims 1 to 3, **characterized in that** the transformer (40) is embodied and connected in such a way that the secondary side of the transformer (40) has a neutral point or a neutral conductor, with the result that the electrical energy can be fed into a power system referred to ground.

5. Device according to one of Claims 1 to 4, **characterized in that** at least one electrical filter (70) is provided by means of which electrical interference signals can be filtered out and/or by means of which a voltage profile which is present can be converted into a predefinable voltage profile.

6. Device according to one of Claims 1 to 5, **characterized in that** the attachment (26) has at least two transformers (40), and **characterized in that** the attachment (26) preferably has at least two sections, wherein in each case at least one transformer (40) is arranged in each section.

7. Device according to one of Claims 1 to 6, **characterized in that** the attachment (26) has at least two transformers (40), and **characterized in that** the attachment (26) is preferably of modular design and/or can be expanded with an agricultural working function, wherein in each case at least one transformer (40) is assigned to each module.

8. Device according to one of Claims 1 to 7, **characterized in that** a transformer (40) is provided and is embodied and/or electrically connected in such a way that part of the electrical supply system (50) or part of the transmission device can be D.C. insulated from the rest of the electrical supply system (50) or from the rest of the transmission device.

9. Device according to one of Claims 1 to 8, **characterized in that** at least two partial circuits with different voltage levels, preferably a low voltage level for supplying electronic control devices and a higher voltage level for supplying electric motors (58, 60) are provided on the attachment (26).

10. Device according to one of Claims 1 to 9, **characterized in that** a flow of material, in particular spraying mixture, seeds and/or fertilizer, which is present at the attachment (26), can be used to cool electrical components of the attachment (26).

11. Device according to one of Claims 1 to 10, **characterized in that** a flow of air which is present at the attachment (26), in particular carrier air for spraying and/or conveying seeds, can be used to cool electrical components of the attachment (26).

12. Device according to one of Claims 1 to 11, **characterized in that** at least one electrical component of the attachment (26) can be cooled with a circuit which is present at the attachment (26), for example with a liquid circuit for driving hydraulic motors.

13. Device according to one of Claims 1 to 12, **characterized in that** at least one means is provided with which electrical insulation on the utility vehicle (10) and/or on the attachment (26) can be provided and/or monitored.

14. Attachment having an electrical load (30, 58, 60), a transformer (40) and an electrical interface (34), wherein the attachment (26) can be reversibly coupled to an attachment interface (24) of the utility vehicle (10), wherein an agricultural working function can be carried out with the electrical load (30, 58, 60), wherein the electrical interface (34) is electrically connected to the transformer (40) and embodied in such a way that said electrical interface (34) can be connected to an electrical interface (36) of a utility vehicle (10), wherein the alternating voltage which is generated by the generator (16) of the utility vehicle (10) and transmitted to the attachment (26) can be converted by means of the transformer (40) in order to be made available to the electrical load (30, 58, 60), and wherein the transformer (40) can be arranged in a housing (42), **characterized in that** the attachment has a device according to one of Claims 1 to 13.

15. Agricultural utility vehicle, in particular tractor, wherein the utility vehicle (10) has an attachment interface (24), a generator (16) and an electrical interface (36), wherein at the attachment interface (24) an attachment (26) is reversibly coupled at at least one electrical load (30, 58, 60), wherein an agricultural working function can be carried out by means of the electrical load of the attachment (26), wherein electrical energy can be produced by means of the generator (16), wherein the generator (16) is electrically connected to the electrical interface (36), wherein the electrical interface (36) is embodied in such a way that said electrical interface (36) can be connected to an electrical interface (34) of the attachment (26), and wherein the electrical energy which is generated by the generator (16) of the utility vehicle (10) can be transmitted in the form of alternating voltage to the attachment (26), **characterized by** a device according to one of Claims 1 to 13.

## Revendications

1. Dispositif d'alimentation électrique d'un accessoire amovible qui peut être accouplé à un véhicule de travail, le véhicule de travail (10) possédant un générateur (16) et une interface de montage (24), de l'énergie électrique pouvant être générée au moyen du générateur (16), un accessoire amovible (26) pouvant être accouplé de manière réversible au véhicule de travail (10) au niveau de l'interface de montage (24), l'accessoire amovible (26) possédant au moins une charge électrique (30, 58, 60) avec laquelle peut être exécutée une fonction de travail agricole, le dispositif possédant un appareil de transmission (32) et au moins un transformateur (40), l'appareil de transmission (32) permet de transmettre l'énergie électrique générée par le générateur (16) du véhicule de travail (10) sous la forme d'une tension alternative à l'accessoire amovible (26), le transformateur (40) se trouvant sur l'accessoire amovible (26) et la tension alternative transmise pouvant être transformée par le transformateur (40) en vue d'être mise à disposition de la charge électrique (30, 58, 60), **caractérisé en ce qu'**il existe un réseau destiné à la transmission de données, par le biais duquel une électronique de commande de l'accessoire amovible (26) peut être identifiée et/ou commandée, un onduleur (38) associé au véhicule de travail (10) et alimenté par un circuit électrique intermédiaire à courant continu (20) du véhicule de travail (10) pouvant être configuré au moyen du réseau.

2. Dispositif selon la revendication 1, **caractérisé en ce que** l'accessoire amovible (26) possède au moins un redresseur (44) avec lequel la tension alternative transformée par le transformateur (40) peut être convertie en tension continue.

3. Dispositif selon la revendication 1 ou 2, **caractérisé en ce que** le véhicule de travail (10) et/ou l'accessoire amovible (26) possèdent un onduleur (54, 56) avec lequel la tension continue peut être convertie en une tension alternative dont la fréquence et l'amplitude peuvent être prédéfinies.

4. Dispositif selon l'une des revendications 1 à 3, **caractérisé en ce que** le transformateur (40) est configuré et branché de telle sorte que le côté secondaire du transformateur (40) possède un point neutre ou un conducteur neutre, de sorte que l'énergie électrique peut être injectée dans un réseau référencé à la masse.

5. Dispositif selon l'une des revendications 1 à 4, **caractérisé en ce qu'**il existe au moins un filtre électrique (70) qui permet d'éliminer par filtrage les signaux électriques parasites et/ou qui permet de convertir une courbe de tension présente en une courbe de tension pouvant être prédéfinie.

6. Dispositif selon l'une des revendications 1 à 5, **caractérisé en ce que** l'accessoire amovible (26) possède au moins deux transformateurs (40) et **en ce que** l'accessoire amovible (26) possède au moins deux sections, au moins un transformateur (40) étant respectivement disposé dans chaque section.

7. Dispositif selon l'une des revendications 1 à 6, **caractérisé en ce que** l'accessoire amovible (26) possède au moins deux transformateurs (40) et **en ce que** l'accessoire amovible (26) est de préférence de construction modulaire et/ou peut recevoir une extension sous la forme d'une fonction de travail agricole, au moins un transformateur (40) étant respectivement associé à chaque module.

8. Dispositif selon l'une des revendications 1 à 7, **caractérisé en ce qu'**un transformateur (40) est présent et configuré et/ou branché électriquement de telle sorte qu'une partie du réseau d'alimentation électrique (50) ou une partie de l'appareil de transmission peut être isolée galvaniquement par rapport au reste du réseau d'alimentation électrique (50) ou par rapport au reste de l'appareil de transmission.

9. Dispositif selon l'une des revendications 1 à 8, **caractérisé en ce qu'**au moins deux circuits électriques partiels ayant des niveaux de tension différents les uns des autres se trouvent sur l'accessoire amovible (26), de préférence un bas niveau de tension destiné à l'alimentation de contrôleurs électroniques et un niveau de tension plus élevé destiné à l'alimentation de moteurs électriques (58, 60).

10. Dispositif selon l'une des revendications 1 à 9, **caractérisé en ce qu'**un flux de substance présent sur l'accessoire amovible (26), notamment de la bouillie de pulvérisation, des semences et/ou de l'engrais, peut être utilisé pour le refroidissement des composants électriques de l'accessoire amovible (26).

11. Dispositif selon l'une des revendications 1 à 10, **caractérisé en ce qu'**un flux d'air présent sur l'accessoire amovible (26), notamment d'air porteur servant à la pulvérisation ou à la projection et/ou au transport de semences, peut être utilisé pour le refroidissement des composants électriques de l'accessoire amovible (26).

12. Dispositif selon l'une des revendications 1 à 11, **caractérisé en ce qu'**au moins un composant électrique de l'accessoire amovible (26) peut être refroidi avec un circuit présent sur l'accessoire amovible (26), par exemple avec un circuit de liquide servant à l'entraînement de moteurs hydrauliques.

13. Dispositif selon l'une des revendications 1 à 12, **caractérisé en ce qu'**il existe au moins un moyen qui permet d'obtenir et/ou de surveiller une isolation électrique sur le véhicule de travail (10) et/ou sur l'accessoire amovible (26).

14. Accessoire amovible comprenant une charge électrique (30, 58, 60), un transformateur (40) et une interface électrique (34), l'accessoire amovible (26) pouvant être accouplé de manière réversible à une interface de montage (24) du véhicule de travail (10), une fonction de travail agricole pouvant être exécutée avec la charge électrique (30, 58, 60), l'interface électrique (34) étant reliée électriquement au transformateur (40) et étant configurée de telle sorte que celle-ci peut être raccordée à une interface électrique (36) d'un véhicule de travail (10), le transformateur (40) permettant de transformer la tension alternative générée par le générateur (16) du véhicule de travail (10) et transmise à l'accessoire amovible (26) en vue d'être mise à disposition de la charge électrique (30, 58, 60), et le transformateur (40) étant disposé dans un boîtier (42), **caractérisé en ce que** l'accessoire amovible possède un dispositif selon l'une des revendications 1 à 13.

15. Véhicule de travail agricole, notamment tracteur, le véhicule de travail (10) possédant une interface de montage (24), un générateur (16) et une interface électrique (36), un accessoire amovible (26) comprenant au moins une charge électrique (30, 58, 60) étant accouplé de manière réversible à l'interface de montage (24), une fonction de travail agricole pouvant être exécutée avec la charge électrique (30, 58, 60) de l'accessoire amovible (26), de l'énergie électrique pouvant être générée par le générateur (16), le générateur (16) étant relié électriquement à l'interface électrique (36), l'interface électrique (36) étant configurée de telle sorte qu'elle peut être raccordée à une interface électrique (34) de l'accessoire amovible (26), et l'énergie électrique générée par le générateur (16) du véhicule de travail (10) pouvant être transmise à l'accessoire amovible (26) sous la forme de tension alternative, **caractérisé par** un dispositif selon l'une des revendications 1 à 13.
